(19) 

Europäisches
Patentamt
European
Patent Office
Office européen
des brevets

(11) **EP 4 131 058 A1**

(12) **EUROPEAN PATENT APPLICATION**
published in accordance with Art. 153(4) EPC

(43) Date of publication:
**08.02.2023 Bulletin 2023/06**

(21) Application number: **22739292.5**

(22) Date of filing: **01.01.2022**

(51) International Patent Classification (IPC):
**G06G 7/60** (1968.09)    **G06N 3/063** (2000.01)

(52) Cooperative Patent Classification (CPC):
**G06G 7/60; G06N 3/063**

(86) International application number:
**PCT/JP2022/000001**

(87) International publication number:
**WO 2022/153882 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 JP 2021006051**

(71) Applicant: **Soliton Systems K.K.
Tokyo 160-0022 (JP)**

(72) Inventors:
• **HASHIMOTO Kenich
Tokyo 160-0022 (JP)**
• **TAKAMURA Kazuhisa
Tokyo 160-0022 (JP)**
• **KAJIHARA Kunihiro
Tokyo 160-0022 (JP)**
• **HAYASHI Teruhiko
Tokyo 160-0022 (JP)**

(74) Representative: **Zacco Denmark A/S
Arne Jacobsens Allé 15
2300 Copenhagen S (DK)**

(54) **NEURON ELEMENT, DIFFERENTIAL NEURON ELEMENT, AC CONVERTER, AND NEURAL NETWORK**

(57)    A neuron element comprising a first charge accumulating unit which is configured to accumulate charges by an input signal, and a signal processing unit which, based on a condition when the charges accumulated in the first charge accumulating unit exceed a first predetermined amount of charges, is configured to discharge a second predetermined amount of charges from the first charge accumulating unit and generate a pulse signal. The signal processing unit is further configured to perform a predetermined processing in relation to the second predetermined amount of charges.

Fig.1

EP 4 131 058 A1

**Description**

Technical Field

The present invention relates to a neuron element, a differential neuron element, an A/D converter, and a neural network.

Background Art

Conventionally, a spiking neural network circuit may comprise a synapse configured to generate an operation signal from a weighted input spike signal, and a plurality of neuron elements configured to generate an output spiking signal based on comparing a voltage of a membrane signal generated by an input of the operation signal with a predetermined threshold value (see PTL 1).

In PTL 1, the operation signal is given as a current signal. In each neuron element, its internal capacitor is charged by the current signals inputted from a plurality of neuron elements in a preceding stage. Then, when a voltage is generated at the internal capacitor and the voltage exceeds the predetermined threshold value, the neuron element generates an output spiking signal.

Aside from this, an A/D converter which converts an analogue signal into a digital signal using a sigma-delta modulation is conventionally known (see NPL 1 and NPL 2).

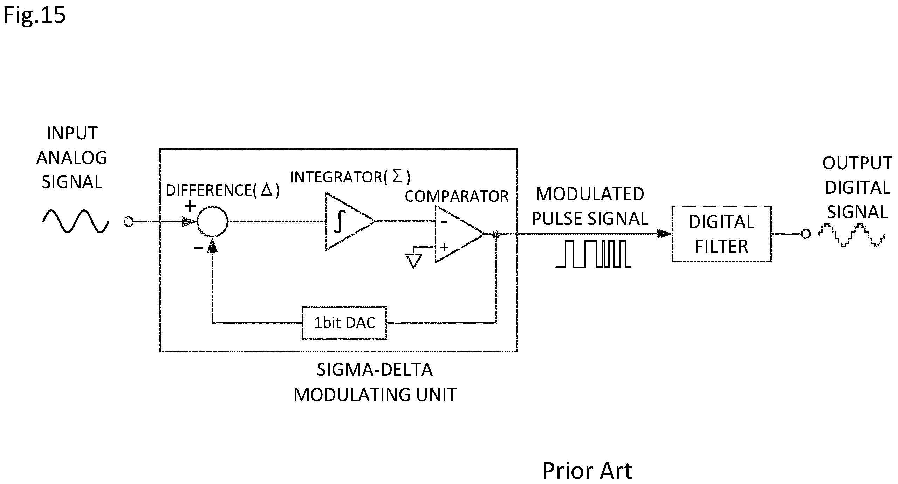

Fig. 15 is a circuit diagram illustrating a basic configuration of the conventional sigma-delta A/D converter. The sigma-delta A/D converter includes a sigma-delta modulating unit that performs the sigma-delta modulation on an input analog signal and generates a 1-bit modulated pulse signal, and a digital filter that receives the modulated pulse signal and converts a number of pulses being received within a predetermined range on a time axis, for example, into an n-bit output digital signal.

Citation List

Patent Literature

PTL 1: U.S. Patent Application Publication No. 2020/0160146

Non-Patent Literature

NPL 1: Kenji Taniguchi, "Introduction to CMOS Analogue Circuitry for LSI-Design", CQ Publishing Co.,Ltd., December 1, 2004

NPL 2: "Basics of Delta-Sigma ADCs: About Delta-Sigma Modulators", retrieved in Jan. 12, 2021", Internet URL: https://e2e.ti.com/blogs_/japan/b/analog/archive/2017/02/03/1-adc

Summary of Invention

In accordance with various embodiments of the present disclosure, a neuron element is provided. In some embodiments, the neuron element comprises: a first charge accumulating unit configured to accumulate charges by an input signal; a signal processing unit which, based on a condition when the charges accumulated in the first charge accumulating unit exceed a first predetermined amount of charges, is configured to: discharge a second predetermined amount of charges from the first charge accumulating unit; generate a pulse signal; and perform a predetermined processing in relation to the second predetermined amount of charges.

In accordance with various embodiments of the present disclosure, a differential neuron element is provided. In some embodiments, the differential neuron element comprises: a charge accumulating unit which accumulates charges by a first input signal and a second input signal, the second input signal obtained by inverting a polarity of the first input signal; a signal processing unit which, based on a condition when the charges accumulated in the charge accumulating unit exceed a first predetermined amount of charges, is configured to: discharge a second predetermined amount of charges from the charge accumulating unit; generate a first pulse signal and a second pulse signal, the second pulse signal obtained by inverting a polarity of the first pulse signal; and perform a predetermined processing in relation to the second predetermined amount of charges.

In accordance with various embodiments of the present disclosure, an A/D converter is provided. The A/D converter comprises: a charge accumulating unit which accumulates charges by an input signal; a signal processing unit which, based on a condition when the charges accumulated in the charge accumulating unit exceed a first predetermined amount of charges, is configured to: discharge a second predetermined amount of charges from the charge accumulating unit; generate a pulse signal; perform a predetermined processing in relation to the second predetermined amount of charges; and a digital filter configured to perform a predetermined digital processing on the pulse signal generated by the signal processing unit.

In accordance with various embodiments of the present disclosure, a neural network is provided. The neural network comprises a plurality of the neuron elements described above, wherein an input signal of any one of the neuron elements is obtained by a weighting addition processing of at least one of signals of at least one external input signal and an output signal of at least another one of the neuron elements, wherein an output signal of any of the neuron element becomes at least one of signals of at least one external output signal and a weighted input signal of the at least another one of the neuron elements.

Advantageous Effects of Invention

The present invention makes it possible to suppress input signal data loss and power consumption.

Brief Description of Drawings

Fig. 1 is a block diagram showing a functional configuration of a neuron element according to a first embodiment.

Fig. 2 is a flowchart showing operation steps of a neuron element.

Fig. 3 is a circuit diagram showing a configuration of a neuron element.

Fig. 4 is a timing chart showing temporal changes of respective signals in a neuron element.

Fig. 5 is a timing chart showing temporal changes of respective signals in a neuron element when a delay period becomes longer.

Fig. 6 is a circuit diagram showing a configuration of a neuron element according to a second embodiment.

Fig. 7 is a timing chart showing temporal changes of respective signals in a neuron element.

Fig. 8 is a timing chart showing temporal changes of respective signals in a neuron element when it is most likely to cause a condition that does not operate normally.

Fig. 9 is a circuit diagram showing a configuration of a neuron element according to a third embodiment.

Fig. 10 is a block diagram showing a functional configuration of an A/D converter according to a fourth embodiment.

Fig. 11 is a set of wave diagrams respectively showing an input analog signal, a modulated pulse signal, and an output digital signal, of a conventional sigma-delta A/D converter.

Fig. 12 is a set of wave diagrams respectively showing an input analog signal, a modulated pulse signal, and an output digital signal, of an A/D converter according to a fourth embodiment.

Fig. 13 is a diagram showing an exemplary configuration of a neural network according to a fifth embodiment.

Fig. 14 is a diagram showing a relation between an output signal $x_i$ of a neuron element ($i$ = 1,2,3) and a weighting coefficient $w_i$ ($i$= 1,2,3).

Fig. 15 is a block diagram showing a functional configuration of a conventional sigma-delta A/D converter.

[Description of Embodiments]

Hereinafter, embodiments in the present invention will be described in detail below with reference to the figures.

[First Embodiment]

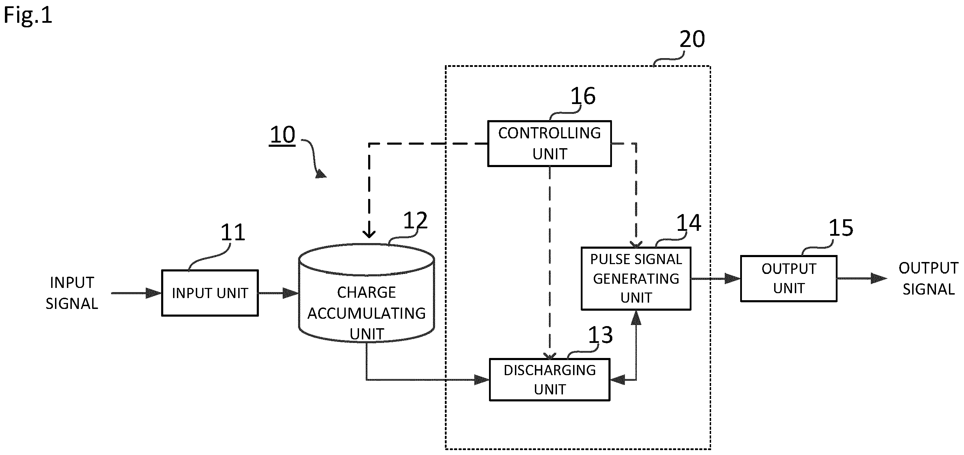

Fig.1 is a block diagram showing a functional configuration of a neuron element 10 according to the first embodiment.
The neuron element 10 comprises an input unit 11, a charge accumulating unit 12, a discharging unit 13, a pulse signal generating unit 14, an output unit 15, and a controlling unit 16.
The input unit 11 supplies a current signal input from an outside (an input signal) to the charge accumulating unit 12. When the input signal is a voltage signal, for example, the input unit 11 converts the voltage signal to a current signal equivalent to the voltage signal using a predetermined method.
The charge accumulating unit 12 is supplied with the current signal from the input unit 11 to accumulate charges.
The discharging unit 13 discharges the charges accumulated in the charge accumulating unit 12 according to an instruction of the controlling unit 16 or according to a pulse signal generated by the pulse signal generating unit 14.
The pulse signal generating unit 14 generates the pulse signal based on an instruction of the controlling unit 16 or in response to the charges discharged by the discharging unit 13, and supplies the pulse signal to the output unit 15.
The output unit 15 outputs the pulse signal supplied from the pulse signal generating unit 14 to the outside. The output unit 15, if required, may output the pulse signal to the outside after shaping a waveform of the pulse signal supplied from the pulse signal generating unit 14 to a predetermined shape.
The controlling unit 16 measures, for example, a voltage generated at the charge accumulating unit 12 as an amount of accumulated charges in the charge accumulating unit 12. The controlling unit 16 instructs, to the pulse signal generating unit 14, a generation of a pulse signal when an amount of accumulated charges being measured (a measured amount of charges) exceeds a predetermined threshold value, and a generation stop of the pulse signal when the measured amount of charges no longer exceeds the threshold value.
Alternatively, the controlling unit 16 instructs, to the discharging unit 13, a discharge of a predetermined amount of charges from the charge accumulating unit 12 when a measured amount of charges exceeds a predetermined threshold value, and a discharge stop of charges from the charge accumulating unit 12 when the measured amount of charges no longer exceeds the threshold value.
The discharging unit 13 and the pulse signal generating unit 14 do not immediately execute a predetermined processing upon receiving an instruction from the controlling unit 16, but execute the predetermined processing after a certain period of time elapses. Also, the discharging unit 13, the pulse signal generating unit 14 and the controlling unit 16 are linked to each other as described above. For example, the discharging unit 13, the pulse signal generating unit 14 and the controlling unit 16 collectively function as the signal processing unit 20, which, when a measured amount of charges in the charge accumulating unit 12 exceeds a predetermined threshold value, discharges a predetermined amount of charges from the charge accumulating unit 12, and generates a pulse signal.

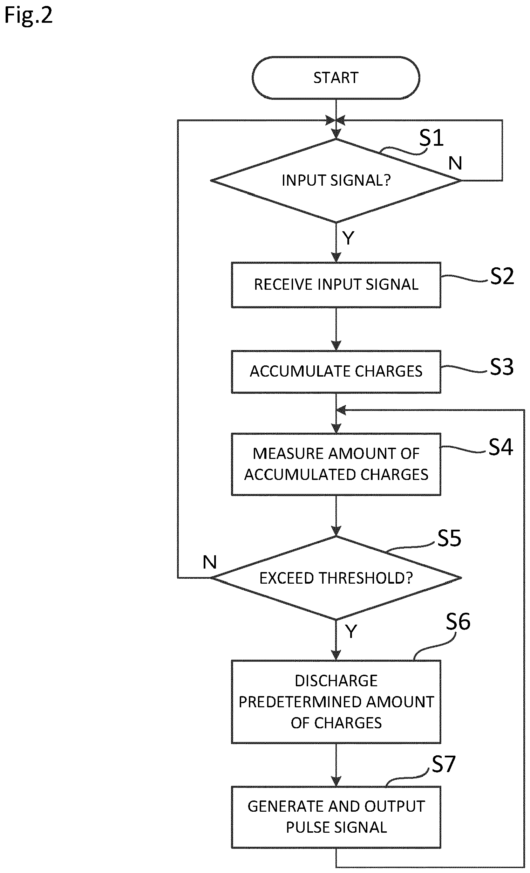

Fig. 2 is a flowchart showing operation steps of the neuron element 10.
The input unit 11, when there is an input signal from an outside (step S1), receives the input signal and supplies it to the charge accumulating unit 12 (step S2). Alternatively, the input unit 11, when the input signal is a voltage signal, converts the voltage signal to an equivalent current signal using a predetermined method, and supplies the converted current signal to the charge accumulating unit 12.
The charge accumulating unit 12 accumulates charges when the input signal is supplied from the input unit 11 (step S3).
The controlling unit 16 measures, for example, a voltage generated at the charge accumulating unit 12 as an amount of accumulated charges in the charge accumulating unit 12 (step S4) and, if the measured amount of accumulated charges exceeds a predetermined threshold value (step S5), the controlling unit 16 instructs, to the discharging unit 13, a discharge of a predetermined amount of charges. Accordingly, the discharging unit 13 discharges the predetermined amount of charges from the charge accumulating unit 12 (step S6). Alternatively, if the measured amount of charges in the charge accumulating unit 12 does not exceed the predetermined threshold value, the charges in the charge accumulating unit 12 is not discharged and the process returns to step S1.
Next, the controlling unit 16 instructs the pulse signal generating unit 14 to generate a pulse signal. Then, the pulse signal generating unit 14 generates the pulse signal (step S7). Alternatively, the pulse signal generating unit 14 may generate the pulse signal in accordance with an amount of charges discharged by the discharging unit 13 even without receiving the instruction from the controlling unit 16.
The output unit 15 outputs the pulse signal generated by the pulse signal generating unit 14 to the outside (step S7). Then, the process returns to step S4. Alternatively, the output unit 15, if required, may output the pulse signal to the outside after shaping a waveform of the pulse signal generated by the pulse signal generating unit 14 to a predetermined shape.

Alternatively, the controlling unit 16 may, when the measured amount of charges in the charge accumulating unit 12 exceeds the threshold value, firstly issue the instruction to the pulse signal generating unit 14, and then issue the instruction to the discharging unit 13. Alternatively, the discharging unit 13 may discharge the predetermined amount of charges in response to the pulse signal generated by the pulse signal generating unit 14, without receiving the instruction from the controlling unit 16.

Here, from a time when the measured amount of charges in the charge accumulating unit 12 exceeds the threshold value to a time when charges are actually discharged from the charge accumulating unit 12, there is a predetermined delay period. Therefore, charges are continuously accumulated in the charge accumulating unit 12 during this delay period. Similarly, there is a predetermined delay period between when the measured amount of charges in the charge accumulating unit 12 falls below the threshold value and when the discharge of charges from the charge accumulating unit 12 actually stops. Therefore, charges are continuously discharged from the charge accumulating unit 12 during the latter delay period.

As described above, when an amount of charges accumulated in the charge accumulating unit 12 exceeds a predetermined threshold value, the neuron element 10 outputs a pulse signal to an outside and discharges a predetermined amount of charges from the charge accumulating unit 12, thereby preventing the charge accumulating unit 12 from overflowing with the charges. In other words, by outputting the pulse signal, which corresponds to a quantity of charges overflowing from the charge accumulating unit 12 to the outside, the neuron element 10 can avoid a loss of data corresponding to an amount of the discarded charges.

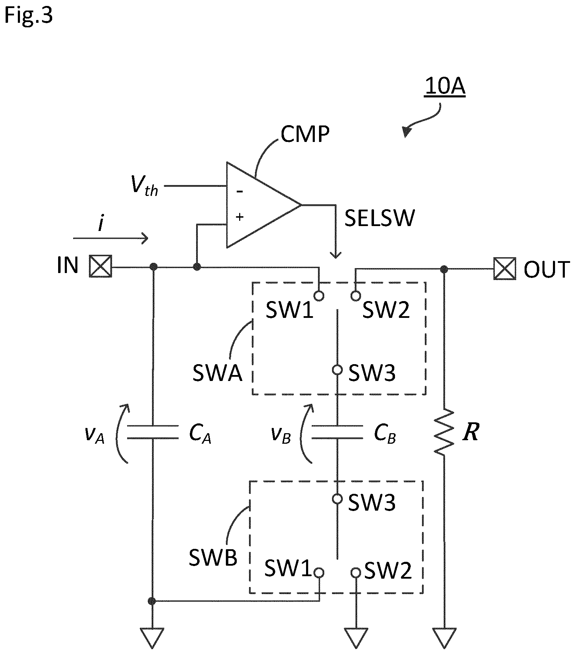

Fig. 3 is a circuit diagram showing a configuration of a neuron element 10A according to the present embodiment. The neuron element 10A is an exemplary configuration of the neuron element 10 shown in Fig. 1.

The neuron element 10A includes a capacitor $C_A$, a capacitor $C_B$, a comparator CMP, switches SWA and SWB, and a resistive load R. The switch SWA is, for example, a SPDT (Single-Pole Double-Throw) switch using the MOS transistors, and has three terminals, SW1, SW2 and SW3. The switch SWA conducts between the terminals SW1 and SW3, or between the terminals SW2 and SW3, depending on a control (selecting) signal from the comparator CMP. The switch SWB also has a same configuration as the switch SWA.

One terminal of the capacitor $C_A$ is connected to an input terminal IN, and the other terminal thereof is grounded. One terminal of the capacitor $C_B$ is connected to the terminal SW3 of the switch SWA, and the other terminal thereof is connected to the terminal SW3 of the switch SWB.

The terminal SW1 of the switch SWA is connected to the input terminal IN. The terminal SW1 of the switch SWB is grounded.

The terminal SW2 of the switch SWA is connected to the resistive load R and an output terminal OUT. The terminal SW2 of the switch SWB is grounded.

One terminal of the resistive load R is connected to the terminal SW2 of the switch SWA and the output terminal OUT, the other terminal is grounded. For this reason, the resistive load R has a function to generate a pulse signal in accordance with an amount of charges discharged from the capacitor $C_B$ via the switch SWA.

The comparator CMP measures an amount of charges accumulated in the capacitor $C_A$ as a voltage of the input terminal IN (= a voltage generated at the capacitor $C_A$) and determines whether or not the voltage being measured (the measured voltage $v_A$) exceeds a predetermined threshold voltage $V_{th}$. The comparator CMP supplies a selecting signal SW1 to the switches SWA and SWB when the measured voltage $v_A$ exceeds the threshold voltage $V_{th}$, or supplies a selecting signal SW2 to the switches SWA and SWB when the measured voltage $v_A$ does not exceed the threshold voltage $V_{th}$.

When the selecting signal is supplied from the comparator CMP, the switches SWA and SWB are switched as follows. That is, the switches SWA and SWB, when the selecting signal SW1 is supplied, conduct between the terminals SW1 and SW3 (switched to SW1). Furthermore, the switches SWA and SWB, when the selecting signal SW2 is supplied, conduct between the terminals SW2 and SW3 (switched to SW2).

Therefore, when the selecting signal SW1 is supplied to the switches SWA and SWB, the capacitors $C_A$ and $C_B$ are connected in parallel. On the other hand, when the selecting signal SW2 is supplied to the switches SWA and SWB, the capacitor $C_B$ and the resistive load R are connected in parallel, and the charges accumulated in the capacitor $C_B$ are discharged through the resistive load R.

Note that the other terminal of the capacitor $C_A$, the terminals SW1 and SW2 of the switch SWB, and the other terminal of the resistive load R are sufficient if they are equipotential, and are not limited to be grounded as shown in the present embodiment.

By the way, the switches SWA and SWB do not switch immediately when the measured voltage $v_A$ during its ramping up exceeds the threshold voltage $V_{th}$ or when the measured voltage $v_A$ during its dropping falls below the threshold voltage $V_{th}$. That is, there is a predetermined delay period $D_{cmp}$ from a time when the ramping up or dropping of the measured voltage $v_A$ exceeds or falls below the threshold voltage $V_{th}$ to a time when the switches SWA and SWB are actually switched.

Therefore, the measured voltage $v_A$ continues to ramp up from the time when the threshold voltage $V_{th}$ is exceeded until the delay period $D_{cmp}$ elapses. When the capacitors $C_A$ and $C_B$ are connected in parallel at a time when the switches SWA and SWB are switched to SW1 after the delay period $D_{cmp}$ has elapsed, the charges accumulated in the capacitor $C_A$ flow into the capacitor $C_B$, and as a result, the measured voltage $v_A$ drops rapidly.

The same is true if the measured voltage $v_A$ of the capacitor $C_A$ falls below the threshold voltage $V_{th}$. That is, even if the switches SWA and SWB are switched to SW1 and the measured voltage $v_A$ drops abruptly and falls below the threshold voltage $V_{th}$, the parallel connection state of the capacitors $C_A$ and $C_B$ is retained until the delay period $D_{cmp}$ elapses from that time. When the switches SWA and SWB are switched to SW2 after the delay period $D_{cmp}$ has elapsed, the capacitor $C_B$ is separated from the capacitor $C_A$ and connected in parallel with the resistive load R.

The delay period $D_{cmp}$ is a total sum of delays such as a delay caused by: an interconnect delay; gate delays of the MOS transistors constituting the switches SWA and SWB; and a delay at the comparator CMP. In particular, the delay caused by the comparator CMPs is determined from its output-capacitance $C_{out}$, its transconductance $g_m$ and so on. Thus, by designing them appropriately, the delay period $D_{cmp}$ is optimized.

When a signal is inputted from an outside, the neuron element 10A configured as described above operates as follows.

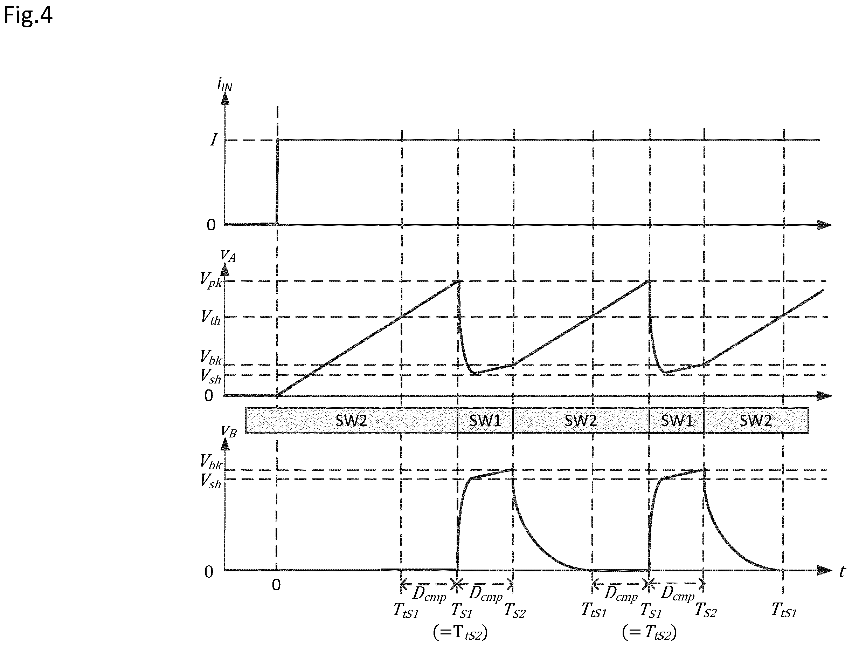

Fig. 4 is a timing chart showing temporal changes of respective signals in the neuron element 10A. Here, at its initial state, charges accumulated in the capacitors $C_A$ and $C_B$ shown in Fig. 3 are zero. Therefore, the measured voltage $v_A$ of the capacitor $C_A$ is 0. Since the measured voltage $v_A$ is lower than the threshold voltage $V_{th}$, both the switches SWA and SWB are switched to SW2.

In Fig. 4, at a time t = 0, a constant current $i_{IN}$ = I is inputted to the input terminal IN. In practice, however, a current input to the input terminal IN is not constant.

Incidentally, a normal operating condition of the neuron element 10A refers to a condition under which the neuron element 10A operates normally even in the most stringent state, specifically, the state in which an allowable maximum instantaneous input current $I_{max}$ is continuously inputted as the constant current. As long as this normal operating condition is satisfied, it is ensured that the neuron element 10A operates normally even when a current that changes arbitrarily but does not exceed $I_{max}$ is inputted. The normal operating condition will be described in detail later.

When the constant current $i_{IN}$ = I is inputted to the input terminal IN, the charges are accumulated in the capacitor $C_A$, and the measured voltage $v_A$ of the capacitor $C_A$ gradually ramps up.

At a time t = $T_{tS1}$, when the measured voltage $V_A$ exceeds the threshold voltage $V_{th}$, the comparator CMP supplies the selecting signal SW1 to the switches SWA and SWB. Consequently, the switches SWA and SWB start their switching operations from SW2 to SW1.

However, as described above, the switching operations from SW2 to SW1 for the switches SWA and SWB are not executed immediately. A time t at which SW2 is actually switched to SW1 is t = $T_{S1}$, after the delay period $D_{cmp}$ from the time t = $T_{tS1}$.

That is, in a period from the time t = $T_{tS1}$, to the time t = $T_{S1}$, the charges are continuously accumulated in the capacitor $C_A$. As a result, the measured voltage $v_A$ ramps up continuously even if it exceeds the threshold voltage $V_{th}$, and reaches a peak voltage $V_{pk}$ just before the time t = $T_{S1}$.

At the time t = $T_{S1}$, when the switches SWA and SWB are switched from SW2 to SW1, the capacitors $C_A$ and $C_B$ are connected in parallel, and the charges accumulated in the capacitor $C_A$ flow into the capacitor $C_B$. Therefore, the measured voltage $v_A$ of the capacitor $C_A$ drops exponentially. Also, the voltage $v_B$ generated at the capacitor $C_B$ ramps up exponentially.

Here, a parasitic resistance r between the capacitors $C_A$ and $C_B$ is so small that a time constant $\tau_1$ between the capacitors $C_A$ and $C_B$ is negligible compared with the delay period $D_{cmp}$. As a consequence, at a moment when the time t = $T_{S1}$ is exceeded, a part of charges accumulated in the capacitors $C_A$ flow into the capacitor $C_B$, and the voltage $v_A$ and $v_B$ respectively generated at the capacitors $C_A$ and $C_B$ have become equal to $V_{sh}$.

At this time, the measured voltage $v_A$ (= $v_B$ = $V_{sh}$) is less than the threshold voltage $V_{th}$, and so the comparator CMP supplies the selecting signal SW2 to the switches SWA and SWB. The switches SWA and SWB then start the switching operation from SW1 to SW2 at a time t = $T_{ts2}$.

Here, as described above, even when the measured voltage $v_A$ (= $v_B$ = $V_{sh}$) becomes lower than the threshold voltage $V_{th}$, the switching operations of the switches SWA and SWB from SW1 to SW2 are not executed immediately. A time t at which SW1 is actually switched to SW2 is t = $T_{S2}$ after the delay period $D_{cmp}$ from the time t = $T_{ts2}$.

That is, in a period from the time t = $T_{ts2}$ to the time t = $T_{S2}$, the charges are continuously accumulated in both of the capacitors $C_A$ and $C_B$. Consequently, the measured voltage $v_A$ (= $v_B$) ramps up and reaches the voltage $V_{bk}$ just before the time t = $T_{S2}$.

Note that the measured voltage $v_A$"s ramp-up speed (gradient) at this time is $I/(C_A + C_B)$ and is smaller than a ramp-up speed of the measured voltage $v_A$ from the time t = 0 to the time t = $T_{tS1}$, (= $I/C_A$). The reason for this is that the charges flowed by the input constant current $i_{IN}$ = I are accumulated in both of the parallel connected capacitors $C_A$ and $C_B$.

When the switches SWA and SWB are switched from SW1 to SW2, the capacitor $C_B$ is connected in parallel with the resistive load R. As a result, the charges accumulated in the capacitor $C_B$ are discharged through the resistive load R. Then, the voltage $v_B$ generated at the capacitor $C_B$ rapidly drops according to an exponential function having a time constant $\tau_2$ (= $R \cdot C_B$). The voltage $v_B$ is supplied to an external load as a voltage pulse signal through the output terminal OUT.

On the other hand, the capacitor $C_A$ is separated from the capacitor $C_B$. Consequently, the capacitor $C_A$ is charged by the input constant current $i_{IN}$ = I, and the measured voltage $v_A$ of the capacitor $C_A$ ramps up. A ramp-up speed of the measured voltage $v_A$ at this time is the same as the ramp-up speed of the measured voltage $v_A$ from the time t = 0 to the time t = $T_{tS1}$, (= $I/C_A$).

At a second time t = $T_{iS1}$, the measured voltage $v_A$ again exceeds the threshold voltage $V_{th}$, and the switches SWA and SWB start the switching operations from SW2 to SW1. At a second time t = $T_{S1}$ after the delay period $D_{cmp}$ has elapsed from the second time t = $T_{tS1}$, the switches SWA and SWB are switched from SW2 to SW1. As a consequence, the charges accumulated in the capacitor $C_A$ flow into the capacitor $C_B$.

As described above, when the constant current $i_{IN}$ = I is inputted to the input terminal IN, the neuron element 10A in the first embodiment outputs a pulsed voltage having a peak voltage of $V_{bk}$ and a period of $2 \cdot D_{cmp}$ + ($T_{tS1}$ -$T_{S2}$) via the output terminal OUT.

Next, two normal operating conditions of the neuron element 10A when the constant current $i_{IN}$ = I is inputted to the input terminal IN at the time t = 0 will be described.

The first normal operating condition is that the measured voltage $v_A$ at the time t = $T_{S1}$ (= $V_{pk}$) does not exceed the source voltage $V_{DD}$. That is, the first normal operating condition is given by Equation (1).

$$V_{DD} > V_{pk} = V_{th} + (I \cdot D_{cmp})/C_A \ldots (1)$$

Here, the second term on the right-hand side of Equation (1) represents a ramping up of the measured voltage $v_A$ due to the charges flowing into the capacitor $C_A$ from the time t = $T_{tS1}$, to the time t = $T_{S1}$.

As for the second normal operating condition, it is assumed that the delay period $D_{cmp}$ becomes sufficiently long. At this time, it is assumed that the threshold voltage $V_{th}$ is sufficiently lowered so that the peak voltage $V_{pk}$ of the capacitor $C_A$ does not exceed the source voltage $V_{DD}$.

Consequently, however, in a situation in which the switches SWAs and SWBs are switched to SW1, or the capacitors $C_A$ and $C_B$ are connected in parallel, it could happen that the measured voltage $v_A$ (= $v_B$) exceeds the threshold voltage $V_{th}$.

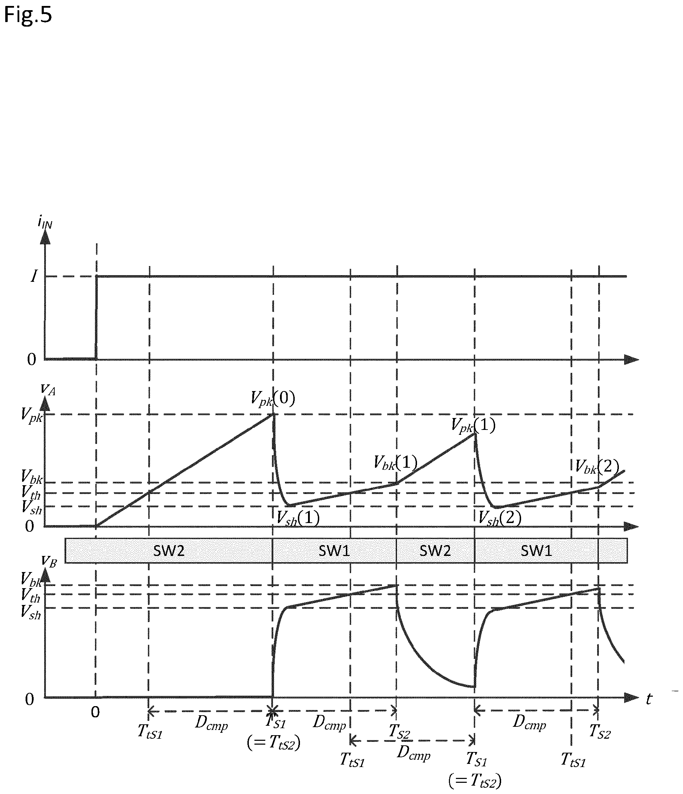

Fig. 5 is a timing chart showing temporal changes of respective signals in the neuron element 10A when the delay period $D_{cmp}$ becomes longer.

In Fig. 5, even when the measured voltage $v_A$ (= $v_B$) exceeds the threshold voltage $V_{th}$, a situation is shown in which the parallel connection state of the capacitors $C_A$ and $C_B$ is retained. Then, at the time t = $T_{S2}$, the capacitors $C_A$ and $C_B$ are separated. A value of the measured voltage $v_A$ (= $v_B$) just before the separation is $V_{bk}$.

On the other hand, the comparator CMP outputs the selecting signal SW1 when the measured voltage $v_A$ (= $v_B$) exceeds the threshold voltage $V_{th}$ (at a time t = $T_{tS1}$), even when the parallel connection of the capacitors $C_A$ and $C_B$ is retained. Then, at a time t = $T_{S1}$, the switches SWA and SWB are switched to SW1.

Thus, at the switching from SW1 to SW2 and at that from SW2 to SW1 by the switches SWA and SWB, a period from a start of the SW switching operation to a time the SW switching is actually enabled overlaps. Specifically, in Fig. 5, a period from the time t = $T_{tS1}$, to the time t = $T_{S1}$ and a period from the time t = $T_{tS2}$ to the time t = $T_{S2}$ overlap each other from the time t = $T_{tS1}$, to the time t = $T_{S2}$.

Consequently, a duration when the switch SWA and SWB are actually switched to SW2 is shortened. Then, because a discharging time of the capacitor $C_B$ is shortened, the charges are not fully discharged from the capacitor $C_B$ and thus there is residual charges in the capacitor $C_B$.

Subsequently, when the switches SWA and SWB are actually switched to SW1 and the capacitors $C_A$ and $C_B$ are connected in parallel, the residual charges are shared by the capacitors $C_A$ and $C_B$. Consequently, a voltage $V_{sh}$ generated at the capacitors $C_A$ and $C_B$ ramps up by the residual charges.

Consequently, the time t = $T_{tS1}$, at which the measured voltage $v_A$ (= $v_B$) exceeds the threshold voltage $V_{th}$ is moved forward (becomes earlier). However, the time t = $T_{S2}$ does not change. This is because that the time t = $T_{S2}$ is determined by the time t = $T_{tS2}$, which is a time at which the measured voltage $v_A$ falls below the threshold voltage $V_{th}$ after an abrupt drop of the measured voltage $v_A$ caused by the switching of the switches SWA and SWB from SW2 to SW1.

Thus, the overlap period described above becomes longer, and the period in which the switches SWA and SWB are actually switched to SW2 is further shortened. In this way, the residual charges in the capacitor $C_B$ gradually increases, and eventually, even if the capacitors $C_A$ and $C_B$ are connected in parallel, the voltage $V_{sh}$ generated at both

capacitors does not fall below the threshold voltage $V_{th}$, and thus the neuron element 10A no more operates normally.

That is, the second normal operating condition is that the charges accumulated in the capacitor $C_B$ are completely discharged while the switches SWA and SWB are actually switched to SW2.

Here, let a voltage generated at the capacitors $C_A$ and $C_B$ just before the parallel connection of the capacitors $C_A$ and $C_B$ is separated by the switching of SWA and SWB from SW1 to SW2 at k-th time be $V_{bk}(k)$. The second normal operating condition is as shown in Equation (2).

$$D_{cmp} -- ((C_A + C_B) \cdot (V_{bk}(k) -- V_{th}))/I > \tau_2 \quad \dots \quad (2)$$

Here, the second term on the left-hand side of Equation (2) corresponds to a duration from a time at which the measured voltage $v_A (= v_B)$ exceeds the threshold voltage $V_{th}$ to a time at which the measured voltage reaches $V_{bk}(k)$, that is, it is a period from the time $t = T_{tS1}$, to the time $t = T_{S2}$ shown in Fig. 5. Furthermore, $\tau_2$ is a time constant of a discharging circuit composed of the capacitor $C_B$ and the resistive load R as described above, and is expressed by Equation (3).

$$\tau_2 = R \cdot C_B \quad \dots \quad (3)$$

Incidentally, the voltage $V_{bk}(k)$ converges to a predetermined value while oscillating each time as a number of switching times of SWA and SWB increases, with a first voltage $V_{bk}(1)$ shown in Fig. 5 as the largest value. On the other hand, a total amount of charges accumulated at a time of the measured voltage $v_A (= v_B) = V_{bk}(1)$ is a sum of charges $C_A \cdot V_{th}$ accumulated in the capacitor $C_A$ at a time of the first $t = T_{tS1}$, and charges $2 \cdot I \cdot D_{cmp}$ flowed during a subsequent duration of $2 \cdot D_{cmp}$. Therefore, a relation between $V_{bk}(k)$ and $V_{bk}(1)$ is expressed by Equation (4).

$$V_{bk}(k) \leqq V_{bk}(1) = (C_A \cdot V_{th} + 2 \cdot I \cdot D_{cmp})/(C_A + C_B) \quad \dots \quad (4)$$

On the other hand, the left-hand side of Equation (2) is minimized when $V_{bk}(k)$ is a maximum value, or $V_{bk}(1)$. Thus, when $V_{bk}(k)$ in Equation (2) is set to $V_{bk}(1)$, Equations (3) and (4) are substituted into Equation (2) and arranged, Equation (5) is obtained.

$$(C_B \cdot V_{th})/I -- D_{cmp} > R \cdot C_B \quad I. \quad (5)$$

Suppose the most severe condition where a maximum instantaneous input current $I_{max}$ is continuously inputted as the constant current. Then, Equations (1) and (5) provide the normal operating conditions among the device parameters for a stable operation of the neuron element 10A. Therefore, when Equations (1) and (5) are arranged in terms of $V_{th}$ with $I = I_{max}$, Equation (6) is obtained.

$$I_{max} \cdot (R + D_{cmp}/C_B) < V_{th} < V_{DD} -- (I_{max} \cdot D_{cmp})/C_I \quad \dots \quad (6)$$

From Equation (6), an allowable setting range of the threshold voltage $V_{th}$ is obtained. Furthermore, if an attention is paid to the leftmost side and the rightmost side of Equation (6), a constraint condition to be satisfied by the delay period $D_{cmp}$ is expressed by Equation (7).

$$D_{cmp} < (C_A \cdot C_B)/(C_A + C_B)(V_{DD}/I_{m-x} I \ R) \quad \dots \quad (7)$$

Equations (6) and (7) provide the normal operating conditions that the threshold voltage $V_{th}$ and the delay period $D_{cmp}$ should respectively satisfy in order for the neuron element 10A to operate normally, assuming the maximum instantaneous input current to be $I_{max}$.

[Second Embodiment]

Next, a second embodiment will be described. The same portions as those of the first embodiment are denoted by the same reference numerals, and repetitive descriptions thereof are omitted.

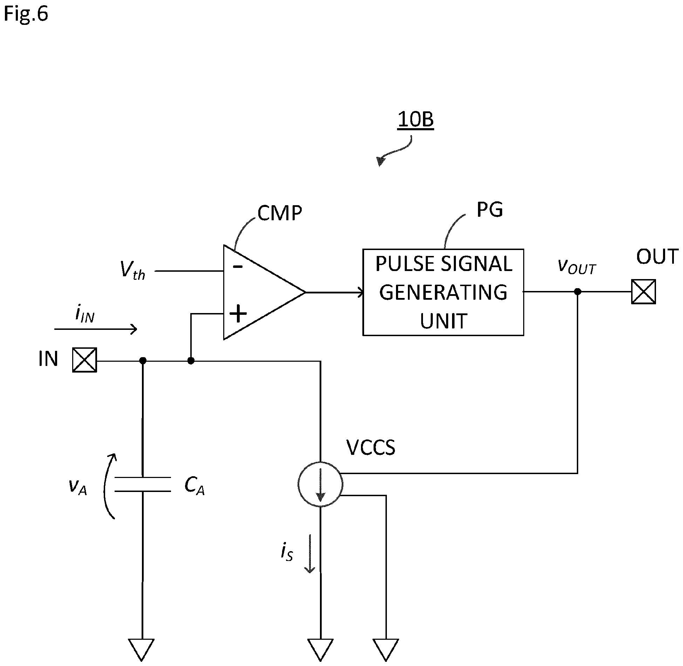

Fig. 6 is a circuit diagram showing a configuration of a neuron element 10B according to the second embodiment. The neuron element 10B is an exemplary configuration of the neuron element 10 shown in Fig. 1.

The neuron element 10B includes a capacitor $C_A$, a comparator CMP, a pulse signal generating unit PG, and a voltage controlled current source VCCS. One terminal of the capacitor $C_A$ is connected to an input terminal IN, and the other terminal thereof is grounded.

The comparator CMP measures an amount of charges accumulated in the capacitor $C_A$ as a voltage of the input terminal IN (= a voltage generated at the capacitor $C_A$), and determines whether the voltage being measured (the measured voltage $v_A$) exceeds a predetermined threshold voltage $V_{th}$. The comparator CMP supplies a high-level signal (H-signal) to the pulse signal generating unit PG when the measured voltage $v_A$ exceeds the threshold voltage $V_{th}$, and supplies a low-level signal (L-signal) to the pulse signal generating unit PG when the measured voltage $v_A$ does not exceed the threshold voltage $V_{th}$.

The pulse signal generating unit PG generates a pulse signal that is a rectangular wave with its duty ratio $\alpha$ ($0 < \alpha < 1$) when the H-signal is supplied from the comparator CMP. On the other hand, the pulse signal generating unit PG does not generate the pulse signal when the L-signal is supplied from the comparator CMP. The pulse signal generated by the pulse signal generating unit PG is outputted to an outside via an output terminal OUT, and is also supplied to the voltage controlled current source VCCS.

The voltage controlled current source VCCS is connected in parallel with the capacitor $C_A$. Specifically, a current input terminal of the voltage controlled current source VCCS is connected to the input terminal IN. Its current output terminal is grounded. Then, the voltage controlled current source VCCS controls the current flowing from the current input terminal to the current output terminal based on the pulse signal generated by the pulse signal generating unit PG.

Specifically, the voltage controlled current source VCCS forcibly causes the constant current $i_S = I_F$ to flow in response to a high-level of the pulse signal generated by the pulse signal generating unit PG, and interrupts the current in response to a low-level of the pulse signal.

When the voltage controlled current source VCCS forces a constant current $i_S = I_F$ and the constant current $I_F$ is greater than the current coming from the input terminal IN, charges are discharged from the capacitor $C_A$ connected to the input terminal IN and the measured voltage $v_A$ of the capacitor $C_A$ drops. When the voltage controlled current source VCCS interrupts the constant current $I_F$, all the current from the input terminal IN flows into the capacitor $C_A$, and the measured voltage $v_A$ of the capacitor $C_A$ ramps up.

The other terminal of the capacitor $C_A$ and the current output terminal of the voltage controlled current source VCCS may be equipotential, and are not limited to be grounded as shown in the present embodiment.

Here, the pulse signal generating unit PG does not initiate or halt the pulse signal generation operation as soon as a ramping up measured voltage $v_A$ exceeds a threshold voltage $V_{th}$ or a dropping measured voltage $v_A$ falls below the threshold voltage $V_{th}$. That is, there is a predetermined delay $D_{cmp}$ from a time when the ramping up or dropping of the measured voltage $v_A$ exceeds or falls below the threshold voltage $V_{th}$ to a time when the pulse signal generating unit PG actually starts or stops the operation.

Therefore, the measured voltage $v_A$ continues to ramp up from the time when the threshold voltage $V_{th}$ is exceeded until the delay period $D_{cmp}$ elapses, and drops when the operation of the pulse signal generating unit PG starts after the delay period $D_{cmp}$ elapses and the voltage controlled current source VCCS discharges charges from the capacitor $C_A$ in conjunction therewith.

The same is true when the measured voltage $v_A$ of the capacitor $C_A$ falls below the threshold voltage $V_{th}$. That is, the measured voltage $v_A$ continues to drop from a time when it falls below the threshold voltage $V_{th}$ until the delay period $D_{cmp}$ elapses. The operation of the pulse signal generating unit PG then stops after the delay period $D_{cmp}$ elapses, and the measured voltage $v_A$ ramps up when the voltage controlled current source VCCS stops discharging the charges from the capacitor $C_A$ in conjunction therewith.

The delay period $D_{cmp}$ is a total sum of an interconnect delay, an operation delay of the pulse signal generating unit PG, a delay caused by the comparator CMP, and the like. In particular, the delay caused by the comparator CMP is determined from its output-capacitance $C_{out}$, its transconductance $g_m$ and so on. Thus, by designing them appropriately, the delay period $D_{cmp}$ is optimized.

When a signal is inputted from an outside, the neuron element 10B configured as described above operates as follows.

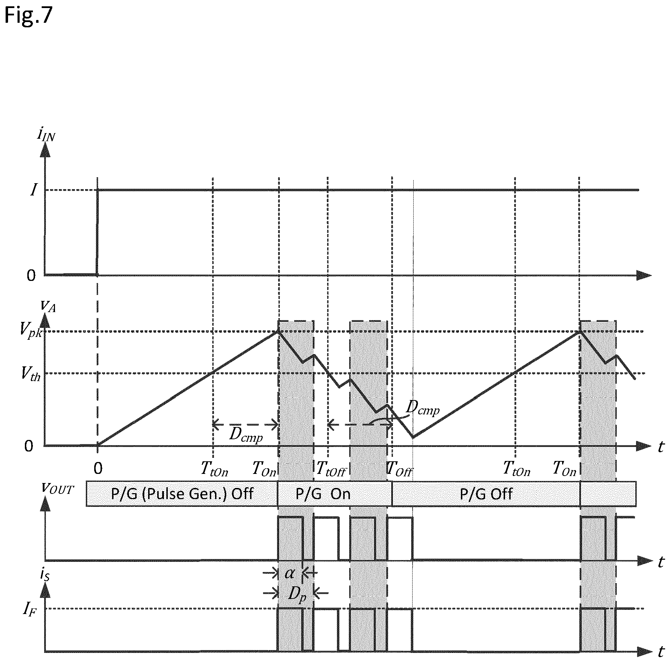

Fig. 7 is a timing chart showing temporal changes of respective signals in the neuron element 10B. In its initialization, charges accumulated in the capacitor $C_A$ shown in Fig. 6 are zero. Therefore, the measured voltage $v_A$ of the capacitor $C_A$ is 0. Since the measured voltage $v_A$ is lower than the threshold voltage $V_{th}$, the comparator CMP outputs the L-signal, and the operation of the pulse signal generating unit PG is stopped.

In Fig. 7, at a time t = 0, a constant current $i_{IN}$ = I is inputted to the input terminal IN. In practice, however, a current input to the input terminal IN is not constant. Details of normal operating conditions of the neuron element 10B in the present embodiment will be described later.

When the constant current $i_{IN}$ = I is inputted to the input terminal IN, the charges are accumulated in the capacitor $C_A$, and the measured voltage $v_A$ of the capacitor $C_A$ gradually ramps up.

At a time t = $T_{ton}$, when the measured voltage $v_A$ exceeds the threshold voltage $V_{th}$, the output signal of the comparator CMP switches from the L-signal to the H-signal. Consequently, the pulse signal generating unit PG initiates the pulse signal generation operation. When the pulse signal is supplied from the pulse signal generating unit PG, the voltage controlled current source VCCS forcibly causes the constant current $i_s$ = $I_F$ to flow in response to the high-level signal (see a case when a time t = $T_{on}$ described later). As a consequence, the charges are discharged from the capacitor $C_A$ and the measured voltage $v_A$ drops.

However, as described above, the pulse signal generating unit PG does not operate immediately even when the measured voltage $v_A$ exceeds the threshold voltage $V_{th}$. A time t at which the pulse signal generating unit PG starts the pulse signal generation operation is t = $T_{on}$ after the delay period $D_{cmp}$ has elapsed from the time t = $T_{tOn}$.

That is, in a period from the time t = $T_{ton}$ to the time t = $T_{on}$, the charges are continuously accumulated in the capacitor $C_A$. As a result, the measured voltage $v_A$ ramps up as it is even if it exceeds the voltage threshold voltage $V_{th}$, and reaches a peak voltage $V_{pk}$ just before the time t = $T_{on}$.

At the time t = $T_{on}$, when the pulse signal generating unit PG starts the pulse signal generation operation, the voltage controlled current source VCCS forcibly causes the constant current $i_s$ = $I_F$ to flow in response to the high-level of the pulse signal supplied from the pulse signal generating unit PG. As a consequence, the charges are discharged from the capacitor $C_A$ and the measured voltage $v_A$ drops.

On the other hand, the voltage controlled current source VCCS cuts off the current flow in response to the low-level of the pulse signal. At this time, the charges are accumulated in the capacitor $C_A$ and the measured voltage $v_A$ ramps up again. The ramp-up speed (slope) of the measured voltage $v_A$ at this time is a same as the ramp-up speed of the measured voltage $v_A$ from the time t = 0 to the time t = $T_{ton}$ (= $I/C_A$).

As a result, during the generation of the pulse signal by the pulse signal generating unit PG, the measured voltage $v_A$ drops on the average while periodically repeating the dropping and the ramping-up.

At a time t = $T_{toff}$, the measured voltage $v_A$ falls below the threshold voltage $V_{th}$. At this time, the signal outputted from the comparator CMP and supplied to the pulse signal generating unit PG is switched from the H-signal to the L-signal. Then, the pulse signal generating unit PG stops the pulse signal generation operation. Consequently, the voltage controlled current source VCCS cuts off the current flow.

However, as described above, the pulse signal generating unit PG does not stop as soon as the measured voltage $v_A$ falls below the threshold voltage $V_{th}$. A time t at which the pulse signal generating unit PG stops the pulse signal generation operation is t = $T_{off}$ after the delay period $D_{cmp}$ has elapsed from the time t = $T_{toff}$. That is, in a period from the time t = $T_{toff}$ to the time t = $T_{off}$, the charges are continuously discharged from the capacitor $C_A$. Consequently, the measured voltage $v_A$ drops as is, even if it falls below the threshold voltage $V_{th}$.

Note that, because of its nature, even if the L-signal is supplied from the comparator CMP during the pulse signal generation operation, the pulse signal generating unit PG generates a complete pulse signal for one period and then stops, without immediately interrupting the generation operation.

At the time t = $T_{off}$, the operation of the pulse signal generating unit PG stops, the voltage controlled current source VCCS stops and interrupts the current flow $i_s$. Then, a constant current $i_{IN}$ = I from the input terminal IN accumulates the charges in the capacitor $C_A$, and the measured voltage $v_A$ of the capacitor $C_A$ ramps up again.

Thereafter, at a second time t = $T_{ton}$, the measured voltage $v_A$ again exceeds the threshold voltage $V_{th}$. At a second time t = $T_{on}$ after the second time t = $T_{ton}$ and the delay period $D_{cmp}$, the pulse signal generating unit PG and the voltage controlled current source VCCS resume their operations. Then, the above-described operations are repeated.

As described above, when the constant current $i_{IN}$ = I is inputted to the input terminal IN, the neuron element 10B according to the second embodiment intermittently outputs a pulse signal having a predetermined voltage, a period $D_p$ and a rectangular wave with a duty ratio $\alpha$, via the output terminal OUT.

Next, two normal operating conditions of the neuron element 10B will be described. In a first normal operating condition, consider a case where a constant current $i_{IN}$ = I is inputted to the input terminal IN at the time t = 0. Here, a maximum instantaneous input current I = $I_{max}$ is used instead of the constant current $i_{IN}$ = I to derive the normal operating condition.

As described above, in order for the measured voltage $v_A$ of the capacitor $C_A$ to continue to drop on average, the amount of charges discharged from the capacitor $C_A$ by the voltage controlled current source VCCS needs to be larger than the amount of charges flowing into the capacitor $C_A$ by the constant current $i_{IN}$ = $I_{max}$.

Consider a pulse signal for one cycle generated by the pulse signal generating unit PG immediately after the time t = $T_{On}$.

In the one cyclic period of the pulse signal, a total amount of charges flowed into the capacitor $C_A$ is given by $D_p \cdot I_{max}$ because one cyclic period of the pulse signal is $D_p$. In the one cyclic period, a total amount of charges discharged from the capacitor $C_A$ by the voltage controlled current source VCCS is given by $\alpha \cdot D_p \cdot I_F$ because an operation time of the voltage controlled current source VCCS is $\alpha \cdot D_p$. Since the latter is larger than the former, the first normal operating condition is expressed by Equation (8).

$$I_F > 1/\alpha \cdot I_{max} \quad \ldots \quad (8)$$

On the other hand, if the voltage controlled current source VCCS forcibly discharges the charges from the capacitor $C_A$ even when the amount of charges accumulated in the capacitor $C_A$ becomes zero, it is assumed that the voltage controlled current source VCCS does not operate normally. Therefore, the second normal operating condition is a condition for avoiding such the unnormal operation.

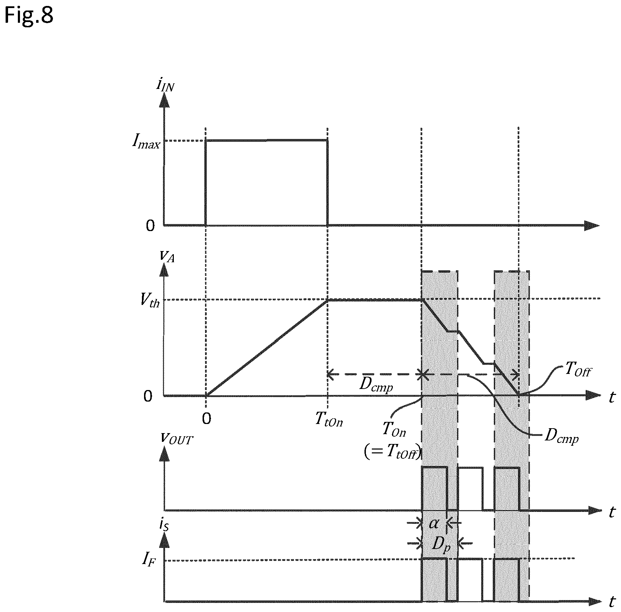

Fig. 8 is a timing chart showing temporal changes of respective signals in the neuron element 10B when it is most likely to cause a condition that does not operate normally.

In Fig. 8, at the time t = 0, the constant current $i_{IN} = I_{max}$ is inputted to the input terminal IN. Thus, the charges are accumulated in the capacitor $C_A$ and the measured voltage $v_A$ of the capacitor $C_A$ ramps up at a rate $I_{max}/C_A$.

At the time t = $T_{ton}$, suppose that the constant current $i_{IN} = I_{max}$ stops immediately after the measured voltage $v_A$ exceeds the threshold voltage $V_{th}$. Consequently, the amount of accumulated charges in the capacitor $C_A$ remains constant. Thereafter, when the pulse signal generating unit PG starts the pulse signal generation operation and the voltage controlled current source VCCS responds to the pulse signal generation operation by causing the constant current $i_s = I_F$ to flow, the charges are forcibly discharged from the capacitor $C_A$.

However, the voltage controlled current source VCCS actually starts the operation at which a time t becomes t = $T_{on}$ after the delay period $D_{cmp}$ elapses from the time t = $T_{ton}$, and after the pulse signal generating unit PG starts the pulse signal generation operation. Here, just before the time t = $T_{on}$, the amount of charges $C_A \cdot V_{th}$ is accumulated in the capacitor $C_A$.

At the time t = $T_{on}$, the voltage controlled current source VCCS causes the constant current $i_s = I_F$ to flow in response to the high-level of the pulse signal supplied from the pulse signal generating unit PG. Consequently, in one cyclic period of the pulse signal, the amount of charges $\alpha \cdot Dp \cdot I_F$ is forcibly discharged from the capacitor $C_A$, and the measured voltage $v_A$ drops by $\alpha \cdot Dp \cdot I_F/C_A$. The voltage controlled current source VCCS also cuts off the current flow in response to the low-level of the pulse signal. At this time, no charge is discharged from the capacitor $C_A$, and the measured voltage $v_A$ does not change.

As described above, when the pulse signal is at the high-level, the measured voltage $v_A$ drops, and when the pulse signal is at the low-level, the measured voltage $v_A$ does not drop and remains constant. Therefore, as shown in Fig. 8, after the time t = $T_{on}$, the measured voltage $v_A$ periodically and intermittently drops.

On the other hand, as described above, immediately before the time t = $T_{on}$, the amount of charges $C_A \cdot V_{th}$ is accumulated in the capacitor $C_A$. Then, since the charges are discharged from the capacitor $C_A$ by the pulse signal immediately after the time t = $T_{on}$, the measured voltage $v_A$ immediately falls below the threshold voltage $V_{th}$ and the signal provided from the comparator CMP to the pulse signal generating unit PG switches from the H-signal to the L-signal. Let a time at this time be t = $T_{toff}$.

However, as described above, the pulse signal generating operation of the pulse signal generating unit PG is not stopped immediately even if the measured voltage $v_A$ falls below the threshold voltage $V_{th}$. A time t at which the pulse signal generating unit PG stops the operation is t = $T_{off}$ after the delay period $D_{cmp}$ has elapsed from the time t = $T_{toff}$. That is, from the time t = $T_{toff}$ to the time t = $T_{off}$, charges are periodically and intermittently discharged from the capacitor $C_A$ by the voltage controlled current source VCCS. In other words, the drop of the measured voltage $v_A$ described above continues until the time t = $T_{off}$.

Suppose that the pulse signal supplied to the voltage controlled current source VCCS goes through n periods and the measured voltage $v_A$ drops to a near-zero value. At this time, a total amount of charges emitted from the capacitor $C_A$ is $n \cdot \alpha \cdot D_p \cdot I_F$. On the other hand, as mentioned previously, an amount of charges accumulated in the capacitor $C_A$ before the pulse signal generating unit PG initiates the pulse signal generation operation is $C_A \cdot V_{th}$.

The total amount of charge discharged from the capacitor $C_A$ must not exceed the amount of charges accumulated in the capacitor $C_A$. That is, it is necessary to satisfy Equation (9).

$$(n \cdot \alpha \cdot D_p \cdot I_F)/C_A < V_{th} < V_{DD} \quad \ldots \quad (9)$$

Here, an inequality on the right-hand side of Equation (9) indicates that an upper limit of the threshold voltage $V_{th}$ is given by the source voltage $V_{DD}$.

Next, a relation between the discharging period and the delay period $D_{cmp}$ by a continuous operation of the voltage controlled current source VCCS will be described.

In Fig. 8, if the delay period $D_{cmp}$ is shorter than the discharging period, a position of the time t = $T_{off}$ moves leftward, and as a result, the charges accumulated in the capacitor $C_A$ does not become zero. Thus, the neuron element 10B operates normally.

Conversely, if the delay period $D_{cmp}$ is longer than the discharging period, the charges are discharged beyond the amount of charges accumulated in the capacitor $C_A$. Therefore, the neuron element 10B does not operate normally. Thus, the condition to be satisfied by the delay period $D_{cmp}$ is given by Equation (10) when the cyclic period $D_p$ of the pulse signal supplied to the voltage controlled current source VCCS is sufficiently smaller than the delay period $D_{cmp}$.

$$D_{cmp} \leqq n \cdot D_p \ \ldots \ (10)$$

In Equation (10), n is given by Equation (11) where the largest integer less than or equal to x for a real number x is represented by [x] using the Gaussian symbol [].

$$n = [(C_A \cdot V_{th})/(\alpha \cdot D_p \cdot I_F)] \ \ldots \ (11)$$

Substituting Equation (11) into Equation (10), and further considering the inequality on the right-hand side of Equations (8) and (9), Equation (10) becomes Equation (12).

$$D_{cmp} < C_A \cdot V_{DD}/I_{max} \ \ldots \ (12)$$

In addition, when Equation (10) is substituted into the inequality on the left-hand side of Equation (9), and Equation (8) is further considered, Equation (9) becomes Equation (13).

$$(D_{cmp} \cdot I_{max})/C_A < V_{th} < V_{DD} \ \ldots \ (13)$$

That is to say, when a maximum instantaneous input current is assumed to be $I_{max}$, Equations (12) and (13) are the normal operating conditions both the delay period $D_{cmp}$ and the threshold voltage $V_{th}$ need to respectively satisfy in order to normally operate the neuron element 10B.

The pulse signal generating unit PG may be designed so as to generate a pulse signal having: a duty ratio $\alpha$ with which the constant current $i_s = I_F$ controlled by the voltage controlled current source VCCS is set so as to satisfy Equation (8); and a cyclic period $D_p$ which is set so as to satisfy Equation (10) using a desired n.

Incidentally, in the first and second embodiments, a case has been described in which a reference potential of the capacitor $C_A$ is set to 0V, a current flows into the capacitor $C_A$, and the measured voltage $v_A$ generated at the capacitor $C_A$ ramps up toward the source voltage $V_{DD}$. However, the present invention is not limited to these embodiments.

For example, as will be described later, while the reference potential of the capacitor $C_A$ remains at 0V, the current may flow out of the capacitor $C_A$, and the measured voltage $v_A$ generated at the capacitor $C_A$ may fall toward a negative source voltage $-V_{DD}$.

Furthermore, the source voltage $V_{DD}$ may be used as the reference potential of the capacitor $C_A$, and as a result of the current flowing into the capacitor $C_A$, the measured voltage $v_A$ generated at the capacitor $C_A$ may fall toward 0V.

[Third Embodiment]

Next, a third embodiment will be described. It should be noted that the same reference numerals are assigned to the same portions as those in the above-described embodiments, and repetitive descriptions thereof are omitted.

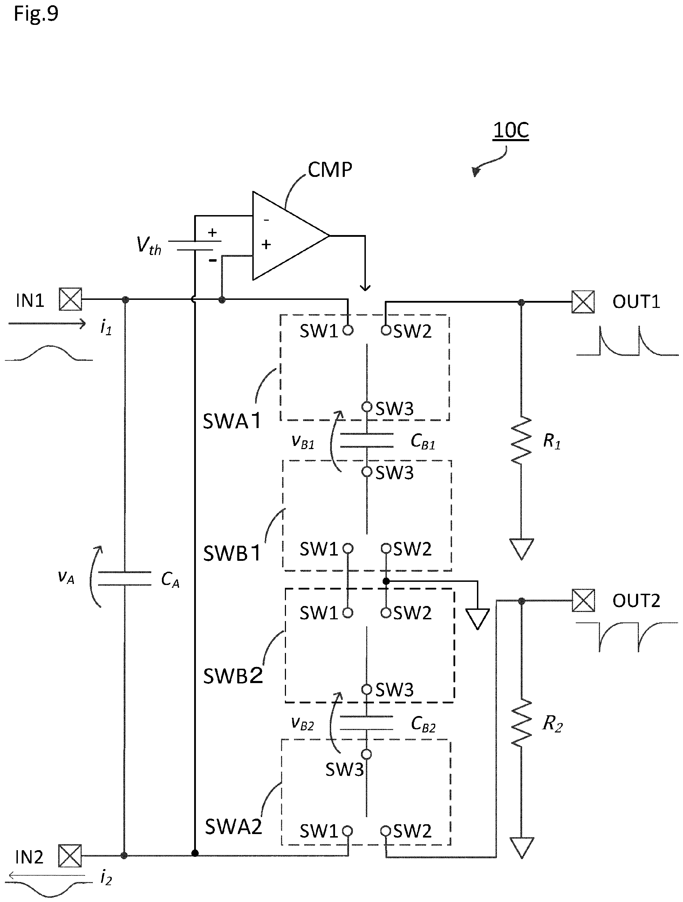

Fig. 9 is a circuit diagram showing an exemplary configuration of a neuron element 10C according to the third embodiment. The neuron element 10C has a circuit corresponding to the neuron element 10A shown in Fig. 3 and a circuit obtained by inverting the circuit corresponding to the neuron element 10A. That is, the neuron element 10C includes capacitors $C_A$, $C_{B1}$ and $C_{B2}$, a comparator CMP, switches SWA1, SWB1, SWA2 and SWB2, and resistive loads $R_1$ and $R_2$.

One terminal of the capacitor $C_A$ is connected to an input terminal IN1, and the other terminal is connected to an input terminal IN2. That is, the capacity $C_A$ is not grounded. Therefore, when a current flows from the input terminal IN1 to the capacitor $C_A$, a current having a magnitude equal to that flowing into the capacitor $C_A$ flows out from the input terminal IN2. Therefore, a voltage $v_A$ based on a potential of the input terminal IN2 is generated at both terminals of the capacity $C_A$. In this way, the capacitor $C_A$ is integrated into one in order to suppress the number of the components.

Each one terminal of the capacitors $C_{B1}$ and $C_{B2}$ is connected to a terminal SW3 of the switches SWA1 and SWA2, respectively. The other terminal of the capacitors $C_{B1}$ and $C_{B2}$ is connected to the terminals SW3 of the switches SWB1 and SWB2, respectively.

Each terminal SW1 of the switches SWA1 and SWA2 is connected to the input terminal IN1 and IN2, respectively. Each terminal SW1 of the switches SWB1 and SWB2 is connected to each other.

A terminal SW2 of the switch SWA1 is connected to the resistive load $R_1$ and an output terminal OUT1. A terminal SW2 of the switch SWA2 is connected to the resistive load $R_2$ and an output terminal OUT2. Each terminal SW2 of the switches SWB1 and SWB2 is grounded.

One terminal of the resistive load $R_1$ is connected to the terminal SW2 of the switch SWA1 and the output terminal OUT1. The other terminal of the resistive load $R_1$ is grounded. One terminal of the resistive load $R_2$ is connected to the terminal SW2 of the switch SWA2 and the output terminal OUT2. The other terminal of the resistive load $R_2$ is grounded.

An inverted input terminal of the comparator CMP is connected to a positive terminal of a constant voltage source $V_{th}$ which supplies a predetermined reference voltage $V_{th}$. A non-inverted input terminal of the comparator CMP is connected to the input terminal IN1. A negative terminal of the constant voltage source $V_{th}$ is connected to the input terminal IN2. Then, the constant voltage source $V_{th}$ supplies, to the inverted input terminal of the comparator CMP, a reference voltage $V_{th}$ based on a potential of the input terminal IN2 as a threshold voltage $V_{th}$.

The comparator CMP measures an amount of charges accumulated in the capacitor $C_A$ as a voltage of the input terminal IN1 based on a potential of the input terminal IN2 (a voltage of the capacitor $C_A$), and determines whether or not the voltage being measured (the measured voltage $v_A$) exceeds the predetermined threshold voltage $V_{th}$. The comparator CMP supplies a selecting signal SW1 to the switches SWA1, SWB1, SWA2 and SWB2 when the measured voltage $v_A$ exceeds the threshold voltage $V_{th}$, and supplies a selecting signal SW2 to the switches SWA1, SWB1, SWA2 and SWB2 when the measured voltage $v_A$ does not exceed the threshold voltage $V_{th}$.

The switches SWA1, SWB1, SWA2 and SWB2 switch as follows when the selecting signal is supplied from the comparator CMP. That is, the switches SWA1, SWB1, SWA2 and SWB2, when the selecting signal SW1 is supplied, conduct between the terminals SW1 and SW3 (switched to SW1). On the other hand, the switches SWA1, SWB1, SWA2 and SWB2, when the selecting signal SW2 is supplied, conduct between the terminals SW2 and SW3 (switched to SW2) .

Therefore, when the selecting signal SW1 is supplied to the switches SWA1, SWB1, SWA2 and SWB2, the capacitor $C_A$ and a serially connected capacitors $C_{B1}$ and $C_{B2}$ are connected in parallel. On the other hand, when the selecting signal SW2 is supplied to the switches SWA1, SWB1, SWA2 and SWB2, the capacitors $C_{B1}$ and $C_{B2}$ are respectively connected to the resistive load $R_1$ and $R_2$ in parallel. The charges accumulated in the capacitors $C_{B1}$ and $C_{B2}$ are discharged through the resistive load $R_1$ and $R_2$, respectively.

The terminals SW2 of the switches SWB1 and SWB2, and the other terminals of the resistive loads $R_1$ and $R_2$ may be equipotential, and are not limited to be grounded as shown in the present embodiment.

When signals are inputted from an outside, the neuron element 10C configured as described above operates as follows. Here, at its initial state, charges accumulated in the capacitors $C_A$, $C_{B1}$ and $C_{B2}$ are zero. Therefore, the measured voltage $v_A$ of the capacitor $C_A$ is 0. Since the measured voltage $v_A$ is below the threshold voltage $V_{th}$, all switches SWA1, SWB1, SWA2 and SWB2 have switched SW2. Thus, the capacitors $C_{B1}$ and $C_{B2}$ are separated from the capacitor $C_A$.

Now, when a constant current $i_1 = I$ is inputted to the input terminal IN1, a constant current $i_2 = I$ equivalent to the constant current $i_1$ flows out from the input terminal IN2 and the charges are accumulated in the capacitors $C_A$, and the measured voltage $v_A$ at the capacitor $C_A$ gradually ramps up.

If the measured voltage $v_A$ exceeds the threshold voltage $V_{th}$, the comparator CMP supplies the selecting signal SW1 to the switches SWA1, SWB1, SWA2 and SWB2. Consequently, the switches SWA1, SWB1, SWA2 and SWB2 initiate their switching operations from SW2 to SW1.

However, as described in the first embodiment, the switching operations from SW2 to SW1 for the switches SWA1, SWB1, SWA2 and SWB2 are not executed immediately. A time t at which SW2 is switched to SW1 is $t = T_{S1}$ which is a time after a delay period $D_{cmp}$ elapses from a time $t = T_{tS1}$, at which the measured voltage $v_A$ exceeds the threshold voltage $V_{th}$.

That is, in a period from the time $t = T_{tS1}$, to the time $t = T_{S1}$, the charges are continuously accumulated in the capacitor $C_A$. As a result, the measured voltage $v_A$ ramps up as it is, even if it exceeds the threshold voltage $V_{th}$, and peaks just before the time $t = T_{S1}$.

At the time $t = T_{S1}$, when the switches SWA1, SWB1, SWA2 and SWB2 are switched from SW2 to SW1, the capacitors $C_A$ and the serially connected capacitors $C_{B1}$ and $C_{B2}$ are connected in parallel. Then, the charges accumulated in the capacitor $C_A$ flow into the serially connected capacitors $C_{B1}$ and $C_{B2}$. Therefore, the measured voltage $v_A$ of the capacitor $C_A$ drops exponentially. Voltages $v_{B1}$ and $v_{B2}$ generated at the respective capacitors $C_{B1}$ and $C_{B2}$ ramp up exponentially.

However, suppose parasitic resistances r among the capacitors $C_A$, $C_{B1}$ and $C_{B2}$ be small enough, and a time constant $\tau_1$ among the capacitors $C_A$, $C_{B1}$ and $C_{B2}$ be negligible compared with the delay period $D_{cmp}$. As a result, at an instant when a time t exceeds $T_{S1}$, a part of the charges accumulated in the capacitor $C_A$ flows into the capacitors $C_{B1}$ and $C_{B2}$. Then, the voltage $v_A$ generated at the capacitor $C_A$ and, a voltage generated at the serially connected capacitors $C_{B1}$ and $C_{B2}$ (= $v_{B1}$ + $v_{B2}$) become equal.

At this time, the measured voltage $v_A$ (= $V_{B1}$ + $V_{B2}$) is lower than the threshold voltage $V_{th}$. For this reason, the comparator CMP provides the selecting signal SW2 to the switches SWA1, SWB1, SWA2 and SWB2. The switches SWA1, SWB1, SWA2 and SWB2 start their switching operations from SW1 to SW2.

When the delay period $D_{cmp}$ elapses from a time when the measured voltage $v_A$ falls below the threshold voltage $V_{th}$, the switches SWA1, SWB1, SWA2 and SWB2 are switched from SW1 to SW2. Thus, the serially connected capacitors $C_{B1}$ and $C_{B2}$ are separated from the capacitor $C_A$. The charges accumulated in the capacitors $C_{B1}$ and $C_{B2}$ are then discharged through the respective resistive loads $R_1$ and $R_2$.

The voltages $V_{B1}$ and $V_{B2}$ generated at the respective capacitors $C_{B1}$ and $C_{B2}$ drop abruptly according to exponential functions having respective time constants $\tau_{21}$ (= $R_1 \cdot C_{B1}$) and $\tau_{22}$ (= $R_2 \cdot C_{B2}$). The voltages $V_{B1}$ and $V_{B2}$ are supplied as pulse signals to external loads via the output terminals OUT1 and OUT2, respectively.

Here, let $C_A$, $C_{B1}$ and $C_{B2}$ be respective capacitances of the capacitors $C_A$, $C_{B1}$ and $C_{B2}$, and $R_1$ and $R_2$ be respective resistances of the resistive loads $R_1$ and $R_2$. At this time, Equations (14) and (15) are respectively satisfied between those device parameters and, the capacitance $C_B$ of the capacitor $C_B$ and the resistance R of the resistive load R, used in the first embodiment.

$$C_{B1} \;=\; C_{B2} \;=\; 2 \cdot C_B \;\;\cdots\;\; (14)$$

$$R_1 \;=\; R_2 \;=\; R/2 \;\;\cdots\;\; (15)$$

If Equations (14) and (15) are satisfied, an upper half of the circuit shown in Fig. 9 (the capacitors $C_A$ and $C_{B1}$, the comparator CMP and the resistive load $R_1$) is equivalent to the circuit shown in Fig. 3 (the capacitors $C_A$ and $C_B$, the comparator CMP and the resistive load R). Furthermore, a lower half of the circuit shown in Fig. 9 (the capacitors $C_A$ and $C_{B2}$, the comparator CMP and the resistive load $R_2$) is equivalent to that inverted polarity of the circuit shown in Fig. 3. That is, a signal output from the output terminal OUT2 is equivalent to that obtained by inverting a polarity of a signal output from the output terminal OUT1.

Consequently, the neuron element 10C can cancel effects of noises applied equally to the upper and the lower circuits compared to the case in Fig. 3, and thus can generate a lower noise, higher precision pulse signal.

Note that the present embodiment is not limited to the one based on the neuron element 10A in the first embodiment, and can be applied to the one based on the neuron element 10B in the second embodiment. That is, the present embodiment can be applied to all of the devices having the same functions as those of the neuron element 10 in Fig. 1.

[Fourth Embodiment]

Next, a fourth embodiment will be described. It should be noted that the same reference numerals are assigned to the same portions as those in the above-described embodiments, and repetitive descriptions thereof are omitted.

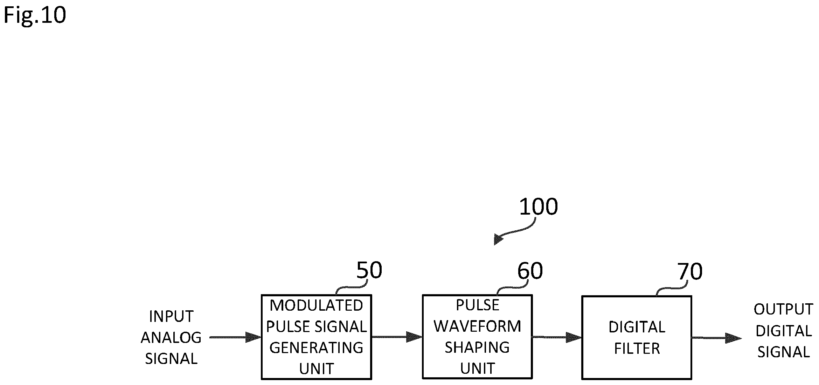

Fig. 10 is a block diagram showing a functional configuration of an A/D converter 100 according to the fourth embodiment. The A/D converter 100 includes a modulated pulse signal generating unit 50, a pulse waveform shaping unit 60, and a digital filter 70. The modulated pulse signal generating unit 50 has a same configuration as the neuron element 10 shown in Fig. 1.

If a pulse signal received from the modulated pulse signal generating unit 50 is not square, the pulse waveform shaping unit 60 shapes it and outputs it as a rectangular wave. The digital filter 70 is, for example, a pulse counter composed of a T-type flip-flop multistage connection. The digital filter 70, for the rectangular wave received from the pulse waveform shaping unit 60, for example, performs processing such as counting a number of the rectangular waves being received within a predetermined range on a time axis and converting the number into an n-bit output digital signal.

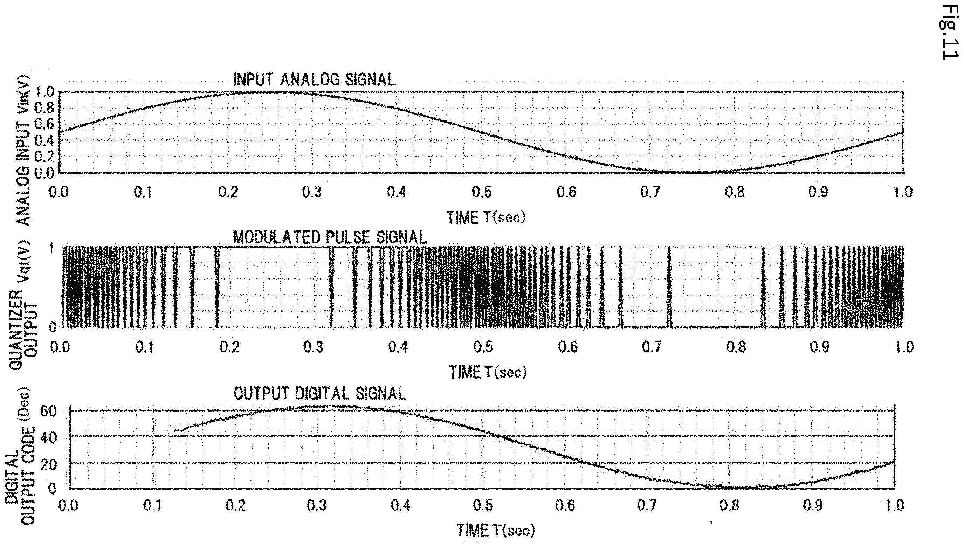

Fig. 11 is a set of wave diagrams respectively showing an input analog signal, a modulated pulse signal and an output digital signal, of a conventional sigma-delta A/D converter (e.g., shown in Fig. 15).

In Fig. 11, an upper input analog signal is a sine wave voltage signal with a frequency of 1Hz and an amplitude of 0.5V (0.0V~1.0V) .

A waveform diagram in a middle row shows a 1-bit modulated pulse signal obtained by performing a sigma-delta modulation at a sampling frequency of 500Hz for this input analog signal.

A lower waveform diagram is an output digital signal as a result of the A/D conversion of the input analog signal obtained by performing a predetermined digital processing for this 1-bit modulated pulse signal in a subsequent digital filter.

As shown in the waveform diagram in the middle row of Fig. 11, in the conventional sigma-delta A/D converter, a pulse density near a reference amplitude of the input analog signal (0.5V in Fig. 11) is high. Thus, in the conventional sigma-delta A/D converter, when the amplitude of the input signal is set to-1.0V~1.0V, for example, the pulse density is highest in the vicinity of 0V that is the reference value.

In other words, in the conventional sigma-delta A/D converter, even when there is little input analog signal (when the input analog signal is near the reference value (zero)), the high density pulse signal occurs. Therefore, there is a problem that a power is consumed unnecessarily even though there is almost no input analog signal.

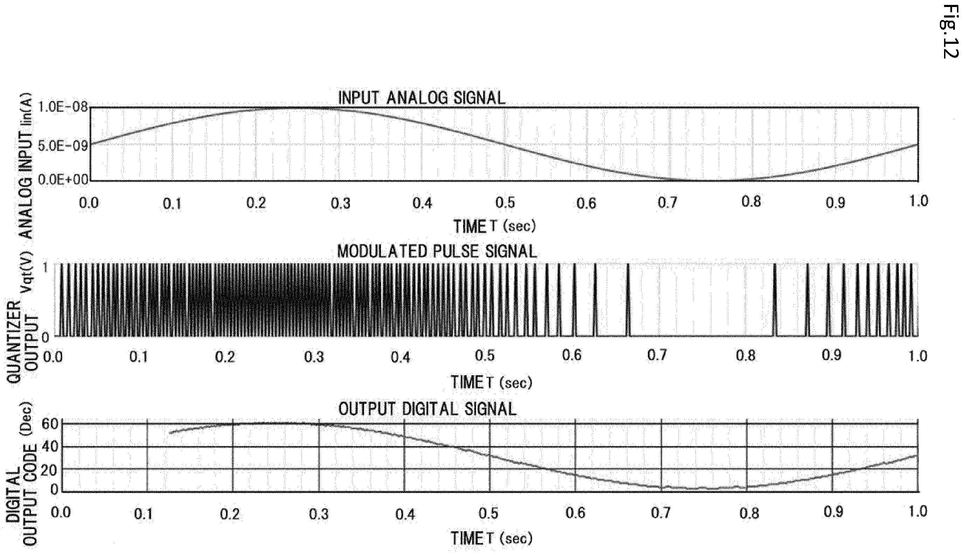

Fig. 12 is a set of wave diagrams respectively showing an input analog signal, a modulated pulse signal and an output digital signal, of the A/D converter 100 shown in Fig. 10.

In Fig. 12, an upper input analog signal is a sine wave current signal with a frequency of 1Hz and an amplitude of 5nA (0nA to 10nA).

A waveform diagram in a middle row shows a 1-bit modulated pulse signal obtained by the modulated pulse signal generating unit 50 of the A/D converter 100 for this input analog signal. It should be noted that although the modulated pulse signal generating unit 50 originally performs an event-driven type operation which performs a processing passively only when there is an input signal, the present embodiment shows a result of performing a synchronous operation with a sampling frequency of 500Hz in order to directly compare the present embodiment with the conventional sigma-delta A/D converter operating with the same sampling frequency.

A lower waveform diagram is an output digital signal as a result of the AD-conversion of the input analog signal obtained by performing a predetermined digital processing for this 1-bit modulated pulse signal by the digital filter 70.

As shown in the waveform diagram in the middle row of Fig. 12, in the A/D converter 100, a pulse density when the input analog signal is near-zero is substantially reduced.

In other words, in the A/D converter 100, when there is almost no input analog signal, a power consumption can be suppressed by making a density of the pulse signal sparse depending on an amplitude of the input analog signal.

In the present embodiment, the A/D converter 100 is an example of an AD-converting of a sine wave current signal as the input analog signal, but it is not limited to such the example.

For example, as described above, the neuron element 10 shown in Fig. 1 originally functions as an event-driven type device that operates only when a signal is inputted. That is, because the neuron element 10, unlike a common synchronized processing, does not operate unnecessary circuitry when there is no input signal, it is possible to significantly suppress the power consumption.

[Fifth Embodiment]

Next, a fifth embodiment will be described. It should be noted that the same reference numerals are assigned to the same portions as those in the above-described embodiments, and repetitive descriptions thereof are omitted.

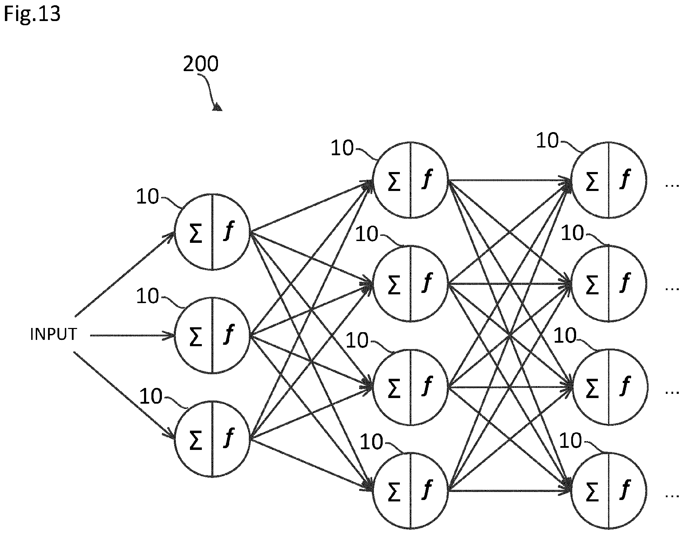

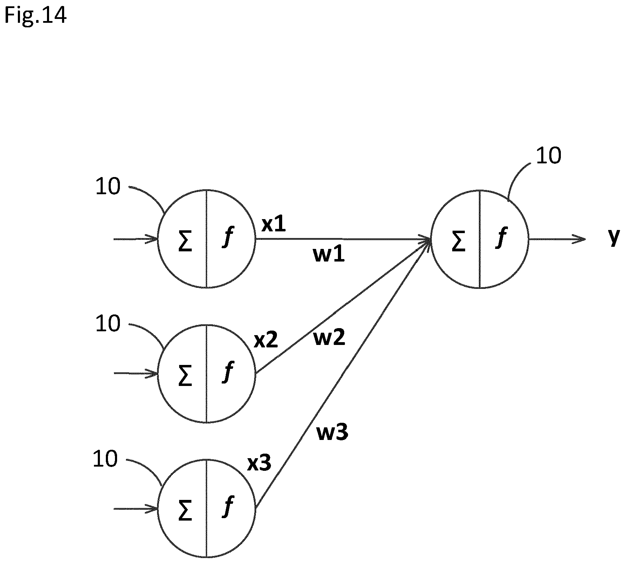

Fig. 13 is a diagram showing an exemplary configuration of a neural network 200 according to the fifth embodiment. The neural network 200 includes a plurality of the neuron element 10 configured in multiple stages. Fig. 14 is a diagram showing a relation between an output signal $x_i$ of the neuron element 10 (i = 1, 2, 3) and a weighting coefficient $W_i$ (i = 1, 2, 3).

An input signal of any neuron element 10 is a summation of a plurality of the neuron element 10 output signal $x_i$ weighted by the weighting coefficient $W_i$. The input signal is accumulated in the charge accumulating unit 12 of the neuron element 10. Then, the neuron element 10 supplies the output signal to the neuron element 10 of a next stage through a processing shown in Fig. 2.

Note that the input signal of any neuron element 10 is not limited to the output signal of another neuron element 10, and may be a signal inputted externally (an external input signal). Also, the input signal of any neuron element 10 may be both the output signal of other neuron element 10 and the external input signal. Furthermore, the output signal and the external input signal may be a plurality or singular.

The output signal of any neuron element 10 is not limited to the input signal of another neuron element 10, and may be an output signal to an outside (an external output signal), or may be both the input signal to other neuron element 10 and the external output signal. Furthermore, the input signal and the external output signal may be a plurality or singular.

The neural network 200 configured as described above can realize a so-called deep learning by optimizing the weighting coefficient $W_i$ based on teacher data prepared in advance for a desired purpose.

It should be noted that the present invention is not limited to the above-mentioned embodiments, and can be applied to those whose design is changed within a scope of the claims.

[Reference Signs List]

10, 10A, 10B, 10C Neuron elements

12 Charge accumulating unit

13 Discharging unit

14 Pulse signal generating unit

16 Controlling unit

20 Signal processing unit

50 Modulated pulse signal generating unit

70 Digital filter

100 A/D converter

200 Neural network

$C_A$, $C_B$, $C_{B1}$, $C_{B2}$ capacitors

CMP comparator

PG pulse signal generating unit

R, $R_1$, $R_2$ resistive loads

SWA, SWA1, SWA2, SWB, SWB1, SWB2 Switches

VCCS Voltage controlled current source

**Claims**

1. A neuron element comprising:

   a first charge accumulating unit which accumulates charges by an input signal,
   a signal processing unit which, when the charges accumulated in the first charge accumulating unit exceed a first predetermined amount of charges, discharges a second predetermined amount of charges from the first charge accumulating unit and generates a pulse signal,
   wherein the signal processing unit performs a predetermined processing in relation to the second predetermined amount of charges.

2. The neuron element according to claim 1,
   wherein the signal processing unit comprises

   a pulse signal generating unit which generates the pulse signal, and
   a discharging unit which, as the predetermined processing, discharges the second predetermined amount of charges from the first charge accumulating unit based on the pulse signal generated by the pulse signal generating unit.

**3.** The neuron element according to claim 2,

wherein the discharging unit is connected in parallel with the first charge accumulating unit and further comprises

a constant current source which discharges the second predetermined amount of charges from the first charge accumulating unit by causing a predetermined current during a period in which the pulse signal is generated by the pulse signal generating unit; and
a determining unit which outputs an on signal when the charges accumulated in the first charge accumulating unit is determined to exceed the first predetermined amount of charges, and

wherein the pulse signal generating unit generates the pulse signal with a predetermined duty ratio while the on signal is inputted from the determining unit.

**4.** The neuron element according to claim 3,
wherein, when a maximum instantaneous input current of the input signal is $I_{max}$, a capacitance of the first charge accumulating unit is $C_A$, a threshold voltage for detecting the first predetermined amount of charges is $V_{th}$, a source voltage is $V_{DD}$, and a delay period from a time when a voltage generated at the first charge accumulating unit exceeds the threshold voltage $V_{th}$ to a time when the constant current source actually causes the predetermined current is $D_{cmp}$, a following equation is satisfied $D_{cmp} < C_A \cdot V_{DD}/I_{max}$.

**5.** The neuron element according to claim 1,
wherein the signal processing unit comprises

a discharging unit which discharges the second predetermined amount of charges from the first charge accumulating unit, and
a pulse signal generating unit which, as the predetermined processing, generates the pulse signal based on the second predetermined amount of charges discharged from the first charge accumulating unit by the discharging unit.

**6.** The neuron element according to claim 5,

wherein the discharging unit further comprises

a second charge accumulating unit;
a determining unit which outputs a first selecting signal when the charges accumulated in the first charge accumulating unit is determined to exceed the first predetermined amount of charges and which outputs a second selecting signal when the charges accumulated in the first charge accumulating unit is determined to fall below the first predetermined amount of charges; and
a connection switching unit which connects the first charge accumulating unit and the second charge accumulating unit in parallel when the first selecting signal is outputted from the determining unit and which connects a resistive load, which corresponds to the pulse signal generating unit, and the second charge accumulating unit in parallel when the second selecting signal is outputted from the determining unit,

wherein the second charge accumulating unit, when connected in parallel with the first charge accumulating unit by the connection switching unit, accumulates the second predetermined amount of charges discharged from the first charge accumulating unit, and
wherein the resistive load, when connected in parallel with the second charge accumulating unit by the connection switching unit, generates a voltage signal corresponding to the pulse signal based on the second predetermined amount of charges accumulated in the second charge accumulating unit.

**7.** The neuron element according to claim 6,
wherein, when a maximum instantaneous input current of the input signal is $I_{max}$, a capacitance of the first charge accumulating unit is $C_A$, a threshold voltage for detecting the first predetermined amount of charges is $V_{th}$, a source voltage is $V_{DD}$, a capacitance of the second charge accumulating unit is $C_B$, a resistance value of the resistive load is R, and a delay period from a time when a voltage generated at the first charge accumulating unit exceeds the threshold voltage $V_{th}$ to a time when the connecting by the connection switching unit is actually executed is $D_{cmp}$, a following equation is satisfied

$$D_{cmp} < (C_A \cdot C_B)/(C_A + C_B)(V_{DD}/I_{max} - R)$$

8. A differential neuron element comprising:

a charge accumulating unit which accumulates charges by a first input signal and a second input signal obtained by inverting a polarity of the first input signal,
a signal processing unit which, when the charges accumulated in the charge accumulating unit exceed a first predetermined amount of charges, discharges a second predetermined amount of charges from the charge accumulating unit and generates a first pulse signal and a second pulse signal obtained by inverting a polarity of the first pulse signal,
wherein the signal processing unit performs a predetermined processing in relation to the second predetermined amount of charges.

9. An A/D converter comprising:

a charge accumulating unit which accumulates charges by an input signal,
a signal processing unit which, when the charges accumulated in the charge accumulating unit exceed a first predetermined amount of charges, discharges a second predetermined amount of charges from the charge accumulating unit and generates a pulse signal,
a digital filter which performs a predetermined digital processing on the pulse signal generated by the signal processing unit,
wherein the signal processing unit performs a predetermined processing in relation to the second predetermined amount of charges.

10. A neural network comprising a plurality of the neuron elements according to any one of claims 1 to 8,

wherein an input signal of any of the neuron element is obtained by a weighting addition processing of at least one of signals of at least one external input signal and an output signal of at least one of the other neuron elements,
wherein an output signal of any of the neuron element becomes at least one of signals of at least one external output signal and a weighted input signal of at least one of the other neuron elements.

Fig.1

INPUT
SIGNAL

11

INPUT UNIT

12

CHARGE
ACCUMULATING
UNIT

10

16

CONTROLLING
UNIT

20

13

DISCHARGING
UNIT

14

PULSE SIGNAL
GENERATING
UNIT

15

OUTPUT
UNIT

OUTPUT
SIGNAL

EP 4 131 058 A1

Fig.2

```
           ┌──────────┐
           │  START   │
           └────┬─────┘
                │
    ┌───────────▼───────────┐
    │        ◇  S1           │   N
    │   INPUT SIGNAL? ──────────────┐
    │        ◇              │       │
    └───────────┬───────────┘       │
                │ Y                 │
    ┌───────────▼───────────┐       │
    │  RECEIVE INPUT SIGNAL │  S2   │
    └───────────┬───────────┘       │
                │                   │
    ┌───────────▼───────────┐       │
    │  ACCUMULATE CHARGES   │  S3   │
    └───────────┬───────────┘       │
                │                   │
    ┌───────────▼───────────┐       │
    │  MEASURE AMOUNT OF    │  S4   │
    │  ACCUMULATED CHARGES  │       │
    └───────────┬───────────┘       │
                │                   │
    N      ◇  S5                    │
    ┌──── EXCEED THRESHOLD?         │
    │           ◇                   │
    │           │ Y  S6             │
    │  ┌────────▼────────┐          │
    │  │   DISCHARGE     │          │
    │  │ PREDETERMINED   │          │
    │  │ AMOUNT OF       │          │
    │  │ CHARGES         │          │
    │  └────────┬────────┘          │
    │           │  S7               │
    │  ┌────────▼────────┐          │
    │  │ GENERATE AND    │          │
    │  │ OUTPUT          │          │
    │  │ PULSE SIGNAL    │          │
    │  └────────┬────────┘          │
    │           └───────────────────┘
```

START

S1 — INPUT SIGNAL? — N

Y

S2 — RECEIVE INPUT SIGNAL

S3 — ACCUMULATE CHARGES

S4 — MEASURE AMOUNT OF ACCUMULATED CHARGES

S5 — EXCEED THRESHOLD? — N

Y

S6 — DISCHARGE PREDETERMINED AMOUNT OF CHARGES

S7 — GENERATE AND OUTPUT PULSE SIGNAL

Fig.3

Fig.4

EP 4 131 058 A1

22

Fig.5

Fig.6

Fig.7

Fig.8

Fig.9

EP 4 131 058 A1

Fig.10

100

INPUT
ANALOG
SIGNAL

50
MODULATED
PULSE SIGNAL
GENERATING
UNIT

60
PULSE
WAVEFORM
SHAPING
UNIT

70
DIGITAL
FILTER

OUTPUT
DIGITAL
SIGNAL

Fig.11

Fig.12

**INPUT ANALOG SIGNAL**

**MODULATED PULSE SIGNAL**

**OUTPUT DIGITAL SIGNAL**

EP 4 131 058 A1

Fig.13

Fig.14

EP 4 131 058 A1

Fig.15

INPUT
ANALOG
SIGNAL

DIFFERENCE($\Delta$)

INTEGRATOR($\Sigma$)

COMPARATOR

1bit DAC

SIGMA-DELTA
MODULATING UNIT

MODULATED
PULSE SIGNAL

DIGITAL
FILTER

OUTPUT
DIGITAL
SIGNAL

Prior Art

## INTERNATIONAL SEARCH REPORT

| International application No. |
| --- |
| **PCT/JP2022/000001** |

**A. CLASSIFICATION OF SUBJECT MATTER**

*G06G 7/60*(2006.01)i; *G06N 3/063*(2006.01)i
FI:   G06N3/063; G06G7/60

According to International Patent Classification (IPC) or to both national classification and IPC

**B. FIELDS SEARCHED**

Minimum documentation searched (classification system followed by classification symbols)

G06G7/60; G06N3/063

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-146373 A (NAT INST FOR MATERIALS SCIENCE) 13 August 2015 (2015-08-13) paragraphs [0003]-[0005], fig. 1, 2 | 1, 5 |
| Y | paragraphs [0003]-[0005], fig. 1, 2 | 9, 10 |
| A | paragraphs [0003]-[0005], fig. 1, 2 | 2-4, 6-8 |
| X | US 2020/0117983 A1 (KOREA INSTITUTE OF SCIENCE AND TECHNOLOGY) 16 April 2020 (2020-04-16) paragraphs [0005], [0039]-[0050], fig. 2A, 2B, 5 | 1, 5 |
| Y | paragraphs [0005], [0039]-[0050], fig. 2A, 2B, 5 | 9, 10 |
| A | paragraphs [0005], [0039]-[0050], fig. 2A, 2B, 5 | 2-4, 6-8 |
| Y | JP 2005-122467 A (CANON INC) 12 May 2005 (2005-05-12) paragraphs [0246]-[0264], fig. 23 | 9, 10 |
| A | US 2020/0019835 A1 (SEOUL NATIONAL UNIVERSITY R&DB FOUNDATION) 16 January 2020 (2020-01-16) paragraphs [0034]-[0057], fig. 2 | 1-10 |

☐ Further documents are listed in the continuation of Box C.        ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 January 2022** | **08 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/000001**

| Patent document cited in search report | | | Publication date (day/month/year) | Patent family member(s) | | | Publication date (day/month/year) |
|---|---|---|---|---|---|---|---|
| JP | 2015-146373 | A | 13 August 2015 | (Family: none) | | | |
| US | 2020/0117983 | A1 | 16 April 2020 | KR | 10-2020-0041768 | A | |
| JP | 2005-122467 | A | 12 May 2005 | CN | 1867888 | A | |
| US | 2020/0019835 | A1 | 16 January 2020 | KR | 10-2020-0007223 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200160146

### Non-patent literature cited in the description

- **KENJI TANIGUCHI.** Introduction to CMOS Analogue Circuitry for LSI-Design. CQ Publishing Co.,Ltd, 01 December 2004

- *Basics of Delta-Sigma ADCs: About Delta-Sigma Modulators,* 12 January 2021, https://e2e.ti.com/blogs_/japan/b/analog/archive/2017/02/03/1-adc